# EUROPÄISCHE PATENTSCHRIFT

(11) **EP 3 450 639 B1**
(45) Veröffentlichungstag und Bekanntmachung des Hinweises auf die Patenterteilung: **01.06.2022**
(21) Anmeldenummer: 18190050.7
(22) Anmeldetag: 21.08.2018
(51) Int. Cl.: E03C 1/04

(54) **VERSENKBARE WASSERARMATUR**
RETRACTABLE FAUCET
ROBINET RÉTRACTABLE

(30) Priorität: 24.08.2017 DE 202017105096 U
(43) Veröffentlichungstag der Anmeldung: 06.03.2019
(73) Patentinhaber: Reich GmbH Regel- und Sicherheitstechnik, 35713 Eschenburg-Wissenbach (DE)
(72) Erfinder: BENDER, Helmuth, 35713 Eschenburg (DE); BENDER, Steffen, 35713 Eschenburg (DE)
(74) Vertreter: Hofstetter, Schurack & Partner

(56) Entgegenhaltungen:
- EP-A1- 0 712 964
- DE-U1- 20 006 841

## Beschreibung

Die vorliegende Erfindung betrifft eine Anordnung einer Wasserarmatur an einem Einrichtungsgegenstand gemäß dem Oberbegriff von Anspruch 1. Die Erfindung betrifft außerdem einen Anhänger und ein Fahrzeug mit einer solchen Anordnung.

Wasserarmaturen, insbesondere für Wohnwagen, Caravans, Motorcaravans oder Boote sowie Anordnungen solcher Wasserarmaturen an jeweiligen Einrichtungsgegenständen sind aus dem allgemeinen Stand der Technik bereits hinlänglich bekannt. Die Wasserarmatur umfasst dabei einen mit Warmwasser und Kaltwasser versorgbaren Mischer zum Mischen des Warmwassers mit dem Kaltwasser. Außerdem umfasst die Wasserarmatur ein Wasserauslaufrohr, welches von dem Mischer mit dem Warmwasser und dem Kaltwasser versorgbar ist.

Da mittels des Mischers das Warmwasser mit dem Kaltwasser beziehungsweise umgekehrt gemischt wird beziehungsweise gemischt werden kann, kann der Mischer ein das Warmwasser und das Kaltwasser umfassendes Gemisch erzeugen und bereitstellen, sodass das Wasserauslaufrohr mit dem genannten Gemisch versorgbar ist. Da das Gemisch das Kaltwasser und das Warmwasser aufweist, kann das Wasserauslaufrohr von dem Mischer mit dem Kaltwasser und dem Warmwasser versorgt werden. Das Wasserauslaufrohr weist wenigstens eine Austrittsöffnung auf, über welche das Kaltwasser und/oder das Warmwasser aus dem Wasserauslaufrohr und somit aus der Wasserarmatur ausströmen kann. Bei der jeweiligen Anordnung der jeweiligen Wasserarmatur an dem jeweiligen Einrichtungsgegenstand ist die jeweilige Wasserarmatur an dem jeweiligen Einrichtungsgegenstand gehalten.

Der DE 200 06 841 U1 ist eine Spülenarmatur für den Haushalt, Karavane oder Boote als bekannt zu entnehmen, bestehend aus einem Auslauf und einer Mischbatterie, die im Bereich des Spülbeckens vorgesehen beziehungsweise angeordnet sind.

Die EP 0 712 964 A1 offenbart eine Armatur mit versenkbarer Wasserauslaufeinrichtung, wobei der Versenkmechanismus der der Erfindung sehr ähnlich ist.

Das Zusammenspiel dieser Armatur mit einem Einrichtungsgegenstand wie z. B. einem Spülbecken wird jedoch darin nicht thematisiert.

Aufgabe der vorliegenden Erfindung ist es, eine Anordnung der eingangs genannten Art bzw. einen Anhänger oder ein Fahrzeug mit einer solchen Anordnung derart weiterzuentwickeln, dass ein besonders kompakter Aufbau realisierbar ist.

Diese Aufgabe wird erfindungsgemäß durch eine Anordnung mit den Merkmalen des Anspruchs 1, durch einen Anhänger mit den Merkmalen des Anspruchs 9 und durch ein Fahrzeug mit den Merkmalen des Anspruchs 10 gelöst. Vorteilhafte Ausgestaltungen mit zweckmäßigen Weiterbildungen der Erfindung sind in den jeweiligen Unteransprüchen angegeben.

Die erfindungsgemäße Anordnung weist eine Wasserarmatur auf, insbesondere für einen Wohnwagen, Caravan, Motorcaravan oder ein Boot. Mit anderen Worten ist die Wasserarmatur für eine Vorrichtung wie beispielsweise einen Wohnwagen, einen Caravan, einen Motorcaravan oder ein Boot verwendbar. Die Wasserarmatur umfasst einen mit Warmwasser und Kaltwasser versorgbaren Mischer zum Mischen des Warmwassers mit dem Kaltwasser beziehungsweise umgekehrt. Außerdem umfasst die Wasserarmatur ein Wasserauslaufrohr, welches von dem Mischer mit dem Warmwasser und dem Kaltwasser versorgbar ist. Dies bedeutet, dass der Mischer das Warmwasser mit dem Kaltwasser beziehungsweise umgekehrt mischt beziehungsweise mischen kann, sodass der Mischer beispielsweise ein das Warmwasser und das mit dem Warmwasser gemischte Kaltwasser umfassendes Gemisch bereitstellt. Dabei ist das Wasserauslaufrohr von dem Mischer mit dem genannten Gemisch versorgbar. Da das Gemisch das Kaltwasser und das Warmwasser umfasst, ist das Wasserauslaufrohr von dem Mischer mit dem Kaltwasser und dem Warmwasser versorgbar. Insbesondere ist es denkbar, den Mischer derart einzustellen, dass er nur mit Warmwasser oder nur mit Kaltwasser versorgt wird und ein durch den Mischer bewirktes Mischen des Warmwassers mit dem Kaltwasser beziehungsweise umgekehrt unterbleibt. Dann stellt der Mischer nur das Warmwasser beziehungsweise nur das Kaltwasser bereit, sodass das Wasserauslaufrohr von dem Mischer mit dem Kaltwasser beziehungsweise mit dem Warmwasser versorgt werden kann.

Das Wasserauslaufrohr weist beispielsweise wenigstens eine auch als Austrittsöffnung bezeichnete Ausströmöffnung auf, welche von dem Warmwasser beziehungsweise von dem Kaltwasser durchströmbar ist. Somit kann das Kaltwasser beziehungsweise das Warmwasser über die Ausströmöffnung aus dem Wasserauslaufrohr und somit aus der Wasserarmatur insgesamt, insbesondere an deren Umgebung, ausströmen.

Um nun einen besonders kompakten und somit bauraumgünstigen Aufbau realisieren zu können, ist es vorgesehen, dass das Wasserauslaufrohr bezogen auf seine Einbaulage in vertikaler Richtung höhenverstellbar ist. Das Wasserauslaufrohr nimmt dabei seine Einbaulage in vollständig hergestelltem Zustand der Wasserarmatur und insbesondere in vollständig hergestelltem Zustand der genannten Vorrichtung ein, in deren vollständig hergestellten Zustand die Wasserarmatur an, insbesondere in, der Vorrichtung montiert ist. Ferner nimmt die Wasserarmatur insbesondere dann ihre Einbaulage an, wenn sie an, insbesondere in, der Vorrichtung montiert ist und die Vorrichtung auf einer zumindest im Wesentlichen horizontalen Ebene steht. Durch die Höhenverstellbarkeit des Wasserauslaufrohrs kann das Wasserauslaufrohr in vertikaler Richtung und somit beispielsweise in Hochrichtung der genannten Vorrichtung, insbesondere translatorisch und/oder relativ zur Vorrichtung, bewegt und dadurch höhenverstellt werden, sodass das Wasserauslaufrohr beispielsweise in vertikaler Richtung nach oben weg und dadurch ausgefahren beziehungsweise angehoben sowie in vertikaler Richtung nach unten weg und dadurch eingefahren beziehungsweise abgesenkt werden kann.

Das Wasserauslaufrohr ist somit beispielsweise in vertikaler Richtung, insbesondere relativ zu der Vorrichtung, zwischen wenigstens einer angehobenen Stellung und wenigstens einer abgesenkten Stellung bewegbar, insbesondere translatorisch bewegbar, wobei das Wasserauslaufrohr in der angehobenen Stellung gegenüber der abgesenkten Stellung in vertikaler Richtung weiter oben angeordnet ist. Dadurch kann das Wasserauslaufrohr beispielsweise in der angehobenen Stellung besonders vorteilhaft und insbesondere besonders komfortabel genutzt werden, da beispielsweise mit Wasser zu befüllende Gegenstände auf einfache Weise unter das Wasserauslaufrohr gehalten oder gestellt werden können. Zumindest in der angehobenen Stellung kann das Wasserauslaufrohr beispielsweise in vertikaler Richtung über eine Arbeitsplatte beziehungsweise einem beispielsweise als Spülbecken ausgebildeten Becken angeordnet werden, wobei beispielsweise das Wasserauslaufrohr in der angehobenen Stellung gegenüber der abgesenkten Stellung weiter von dem Becken entfernt ist.

Durch Bewegen des Wasserauslaufrohrs in vertikaler Richtung nach unten kann das Wasserauslaufrohr abgesenkt und dadurch beispielsweise in Richtung des Beckens bewegt werden. Insbesondere ist es dadurch möglich, das Wasserauslaufrohr in eine neben dem Becken angeordnete Ausnehmung zu bewegen und dadurch das Wasserauslaufrohr in der abgesenkten Stellung zumindest teilweise in dem Becken beziehungsweise in der Ausnehmung zu verstauen. Dadurch nimmt das Wasserauslaufrohr in der abgesenkten Stellung keinen oder nur geringen Raum in Anspruch, sodass auf einfache Weise ein kompakter Aufbau realisiert werden kann. Insbesondere ist es möglich, die Ausnehmung und insbesondere das Becken dann, wenn sich das Wasserauslaufrohr in der abgesenkten Stellung befindet, mittels eines insbesondere eigensteifen Abdeckelements abzudecken. Hierbei ist es insbesondere möglich, das Abdeckelement bündig mit einer sich an das Becken beziehungsweise die Ausnehmung anschließenden Arbeitsplatte anzuordnen, sodass die Arbeitsplatte und das Abdeckelement eine durchgängige beziehungsweise ebene und besonders große Arbeitsfläche bilden können.

Der Erfindung liegt insbesondere die folgende Erkenntnis zugrunde: In Vorrichtungen wie beispielsweise Wohnwagen, Caravans, Motorcaravans, Booten oder Reisemobilen steht üblicherweise wenig Platz zur Verfügung, insbesondere in einem jeweiligen, im Innenraum der jeweiligen Vorrichtung vorgesehenen Küchenbereich. Dieser beengte Platz beziehungsweise Raum wird herkömmlicherweise durch gängige Wasserarmaturen noch zusätzlich verringert, da übliche Wasserarmaturen, insbesondere deren Wasserauslaufrohre, besonders weit von jeweiligen Einrichtungsgegenständen wie beispielsweise Arbeitsplatten, Becken, insbesondere Spülbecken, oder dergleichen abstehen und somit in ansonsten nutzbaren Raum hineinragen.

Eine solche, durch die Wasserarmatur bewirkte übermäßige Beeinträchtigung von ansonsten zur Verfügung stehendem Raum kann mittels der Wasserarmatur nun vermieden werden, da das Wasserauslaufrohr höhenverstellbar ist und somit angehoben und insbesondere abgesenkt werden kann. Insbesondere bei Nichtbenutzung der Wasserarmatur kann das Wasserauslaufrohr abgesenkt werden, sodass die Wasserarmatur nicht oder nur sehr geringfügig von einem Einrichtungsgegenstand wie beispielsweise einer Arbeitsplatte beziehungsweise einem Becken absteht. Somit nimmt das Wasserauslaufrohr bei dessen Nichtbenutzung keinen oder nur einen geringen Bauraum in Anspruch, sodass auch bei beengten Platzverhältnissen ein besonders großer nutzbarer Raum in Innenraum der jeweiligen Vorrichtung geschaffen werden kann.

Um einen besonders kompakten Aufbau zu realisieren, ist es vorgesehen, dass das Wasserauslaufrohr ein in der Einbaulage des Wasserauslaufrohrs in vertikaler Richtung verlaufendes erstes Rohrteil und ein schräg oder senkrecht zum ersten Rohrteil verlaufendes zweites Rohrteil aufweist. Das jeweilige Rohrteil weist beispielsweise eine Längserstreckungsrichtung auf, wobei die Längserstreckungsrichtung des ersten Rohrteils bezogen auf die Einbaulage des Wasserauslaufrohrs in vertikaler Richtung verläuft. Die Längserstreckungsrichtung des zweiten Rohrteils verläuft schräg oder senkrecht zum ersten Rohrteil und somit zur Längserstreckungsrichtung des ersten Rohrteils, sodass beispielsweise die Längserstreckungsrichtung des zweiten Rohrteils in horizontaler Richtung verläuft. Hierdurch kann der Bauraumbedarf des Wasserauslaufrohrs an sich besonders gering gehalten werden, sodass ein besonders kompakter Aufbau dargestellt werden kann.

Dabei ist es zur Realisierung einer besonders vorteilhaften Bedienung der Wasserarmatur vorgesehen, dass das erste Rohrteil wenigstens eine Führungseinrichtung aufweist, mittels welcher das Wasserauslaufrohr beim Höhenverstellen geführt wird beziehungsweise zu führen ist. Hierdurch kann das Wasserauslaufrohrs präzise und definiert abgesenkt oder angehoben werden, sodass ein besonders kompakter Aufbau darstellbar ist.

Um auf bauraumgünstige Weise eine besonders vorteilhafte Bedienung beziehungsweise Bedienbarkeit der Wasserarmatur zu realisieren, ist es vorgesehen, dass das Wasserauslaufrohr bezogen auf seine Einbaulage in vertikaler Richtung zwischen wenigstens einer Verstaustellung und wenigstens einer Gebrauchsstellung verschiebbar und dadurch höhenverstellbar ist. In der Gebrauchsstellung das Wasserauslaufrohr gegenüber der Verstaustellung in vertikaler Richtung höher angeordnet. Somit ist beispielsweise die Gebrauchsstellung die zuvor genannte angehobene Stellung, wobei beispielsweise die Verstaustellung die zuvor beschriebene abgesenkte Stellung ist. Somit kann beispielsweise das Wasserauslaufrohrs in der Verstaustellung zumindest teilweise in der zuvor genannten Ausnehmung angeordnet sein, wobei insbesondere das zweite Rohrteil zumindest teilweise, insbesondere zumindest überwiegend oder vollständig, in der Verstaustellung in der Ausnehmung angeordnet ist.

Dabei ist es ferner vorgesehen, dass die Führungseinrichtung in der Verstaustellung eine Drehung des Wasserauslaufrohrs um eine in vertikaler Richtung verlaufende Drehachse verhindert. Dies bedeutet, dass das Wasserauslaufrohr dann, wenn es sich nicht oder noch nicht in der Gebrauchsstellung befindet, nicht um die Drehachse gedreht beziehungsweise geschwenkt werden kann. Die Führungseinrichtung lässt in der Gebrauchsstellung eine Drehung des Wasserauslaufrohrs um die Drehachse zu. Dies bedeutet beispielsweise, dass das Wasserauslaufrohr dann und nur dann um Drehachse gedreht beziehungsweise verschwenkt werden kann, wenn sich das Wasserauslaufrohr in der Gebrauchsstellung befindet. Somit können beispielsweise unerwünschte Kollisionen des Wasserauslaufrohrs mit in der Umgebung des Wasserauslaufrohrs angeordneten Komponenten vermieden werden.

Als besonders vorteilhaft hat es sich gezeigt, wenn das Wasserauslaufrohr bezogen auf seine Einbaulage in vertikaler Richtung relativ zu dem Mischer translatorisch bewegbar und dadurch höhenverstellbar ist. Wird somit beispielsweise das Wasserauslaufrohr in vertikaler Richtung, insbesondere translatorisch, bewegt und dadurch höhenverstellt, so wird der Mischer beispielsweise nicht bewegt, sondern bleibt beispielsweise ortsfest. Hierdurch kann das Wasserauslaufrohr besonders einfach und über besonders große Wege angehoben und abgesenkt werden, sodass sich ein besonders kompakter Aufbau realisieren lässt.

Eine weitere Ausführungsform zeichnet sich dadurch aus, dass das Wasserauslaufrohr mit dem Mischer über einen flexiblen Schlauch fluidisch verbunden ist, sodass das Wasserauslaufrohr über den Schlauch mit dem von dem Mischer bereitgestellten Warmwasser und Kaltwasser versorgbar ist. Der auch als flexible Leitung bezeichnete flexible Schlauch ermöglicht einerseits eine besonders vorteilhafte sowie dichte fluidische Verbindung zwischen dem Wasserauslaufrohr und dem Mischer. Andererseits ermöglicht der flexible Schlauch eine vorteilhafte Bewegbarkeit des Wasserauslaufrohrs, sodass dieses besonders vorteilhaft in vertikaler Richtung relativ zu dem Mischer bewegt werden kann.

Dabei hat es sich als besonders vorteilhaft gezeigt, wenn sich bei in vertikaler Richtung verlaufenden Relativbewegungen zwischen dem Wasserauslaufrohr und dem Mischer zumindest ein Teil des Schlauches mit dem Wasserauslaufrohr relativ zu dem Mischer mitbewegt. Mit anderen Worten, wird das Wasserauslaufrohr relativ zu dem Mischer in vertikaler Richtung bewegt und dadurch höhenverstellt, so bewegt sich zumindest ein Teil des Schlauches mit dem Wasserauslaufrohr und insbesondere relativ zu dem Mischer mit. Wieder mit anderen Worten ausgedrückt kann der flexible Schlauch Bewegungen des Wasserauslaufrohrs in vertikaler Richtung relativ zu dem Mischer mit ausführen, sodass eine besonders umfangreiche beziehungsweise flexible Bewegbarkeit des Wasserauslaufrohrs relativ zu dem Mischer dargestellt werden kann.

Um beispielsweise das Wasserauslaufrohr bei dem Höhenverstellen mittels der Führungseinrichtung zu führen, weist die Führungseinrichtung beispielsweise wenigstens eine erste Führungsbahn auf, welche insbesondere an dem ersten Rohrteil vorgesehen ist und sich in vertikaler Richtung erstreckt. In die erste Führungsbahn greift beispielsweise ein Führungselement ein, sodass das Führungselement formschlüssig mit dem Wasserauslaufrohr zusammenwirkt. Insbesondere verhindern das Führungselement und die Führungsbahn dann, wenn sich das Wasserauslaufrohr noch nicht in der Gebrauchsstellung befindet, eine Drehung des Wasserauslaufrohrs um die Drehachse.

Ferner ist es denkbar, dass die Führungseinrichtung eine insbesondere mit der ersten Führungsbahn verbundene zweite Führungsbahn aufweist, welche sich beispielsweise in Umfangsrichtung des Wasserauslaufrohrs, insbesondere des ersten Rohrteils, und/oder insbesondere um die vertikale Richtung erstreckt. Durch Bewegen des Wasserauslaufrohrs aus der Verstaustellung in die Gebrauchsstellung wird beispielsweise das Führungselement zunächst entlang der der ersten Führungsbahn bewegt und kommt dann von der ersten Führungsbahn in die zweite Führungsbahn. Da sich die zweite Führungsbahn in Umfangsrichtung des Wasserauslaufrohrs, insbesondere des ersten Rohrteils, beziehungsweise um die Drehachse erstreckt, kann das Führungselement in beziehungsweise entlang der zweiten Führungsbahn bewegt werden, wenn das Wasserauslaufrohr und somit das erste Rohrteil um die Drehachse gedreht werden. Dabei ist es insbesondere vorgesehen, dass die Führungseinrichtung, insbesondere das Führungselement und die zweite Führungsbahn, ein Absenken des Wasserauslaufrohrs verhindern, wenn sich das Wasserauslaufrohr in einer von einer Absenkschwenkstellung unterschiedlichen Gebrauchsschwenkstellung befindet.

Die zweite Führungsbahn lässt beispielsweise Drehungen des Wasserauslaufrohrs in vertikaler Richtung zu, jedoch verhindert die zweite Führungsbahn beziehungsweise die Führungseinrichtung dann, wenn sich das Wasserauslaufrohr in einer von der Absenkschwenkstellung unterschiedlichen Gebrauchsschwenkstellung befindet, eine Absenkung des Wasserauslaufrohrs. Erst dann, wenn sich das Wasserauslaufrohr in der beispielsweise mit der Gebrauchsstellung korrespondierenden Absenkschwenkstellung befindet, kann das Führungselement aus der zweiten Führungsbahn in die erste Führungsbahn bewegt werden, sodass das Wasserauslaufrohr abgesenkt werden kann.

Ferner ist es denkbar, dass die jeweilige Führungsbahn beispielsweise an einem Führungsrohr vorgesehen ist, mittels welchem das Wasserauslaufrohr, insbesondere über das erste Rohrteil, zu führen ist. Das Führungsrohr umgibt beispielsweise das Wasserauslaufrohr, insbesondere das erste Rohrteil, außenumfangsseitig zumindest teilweise. Hierbei ist dann beispielsweise das genannte Führungselement an dem Wasserauslaufrohr, insbesondere an dem ersten Rohrteil, vorgesehen.

Eine weitere Ausführungsform zeichnet sich dadurch aus, dass wenigstens ein aus einem Kunststoff, insbesondere aus Gummi, gebildetes Abbremselement vorgesehen ist, welches eine der Höhenverstellung entgegenwirkende Kraft auf das Wasserauslaufrohr ausübt. Dies bedeutet, dass die der Höhenverstellung entgegenwirkende Kraft das Anheben und/oder insbesondere das Absenken des Wasserauslaufrohrs, insbesondere in selbstständiges Absenken des Wasserauslaufrohrs, abbremst oder verhindert, sodass beispielsweise das Wasserauslaufrohr sich nicht selbstständig aufgrund seiner eigenen Gewichtskraft absenken kann. Hierdurch ist eine besonders vorteilhafte Bedienung realisierbar. Schließlich hat es sich als besonders vorteilhaft gezeigt, wenn das Abbremselement als Dichtungselement ausgebildet ist, mittels welchem das Wasserauslaufrohr gegen wenigstens ein weiteres Bauteil der Wasserarmatur abgedichtet ist. Dem Abbremselement kommt somit eine Doppelfunktion zu, da es einerseits zum Abbremsen der Höhenverstellung des Wasserauslaufrohrs und andererseits zum Abdichten des Wasserauslaufrohrs verwendet wird. dadurch können die Teileanzahl und somit die Kosten, das Gewicht und der Bauraumbedarf besonders gering gehalten werden.

Erfindungsgemäß ist die Wasserarmatur an einem Einrichtungsgegenstand gehalten.

Dabei umfasst der Einrichtungsgegenstand eine Arbeitsplatte, welche eine Oberfläche aufweist, und ein Becken zum Auffangen und Abführen von Wasser, wobei sich an das Becken eine mit dem Becken verbundene Ausnehmung anschließt, und wobei das zweite Rohrteil in der Verstaustellung vollständig in der Ausnehmung aufgenommen und gegenüber der Oberfläche zurückversetzt ist.

Zur Erfindung gehört auch ein Anhänger, insbesondere ein Wohnwagen, Caravan, Motorcaravan oder für ein Boot, umfassend wenigstens eine erfindungsgemäße Anordnung.

Außerdem gehört zur Erfindung ein Fahrzeug, insbesondere ein Wohnwagen, ein Caravan, ein Motorcaravan oder ein Boot, umfassend wenigstens eine erfindungsgemäße Anordnung.

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in:
- Fig. 1: eine schematische Perspektivansicht einer erfindungsgemäßen Anordnung einer erfindungsgemäßen Wasserarmatur an einem Einrichtungsgegenstand, insbesondere für einen Wohnwagen, Caravan, Motorcaravan oder ein Boot;
- Fig. 2: eine weitere schematische Perspektivansicht der Anordnung;
- Fig. 3: eine weitere schematische Perspektivansicht der Anordnung, wobei sich ein Wasserauslaufrohr der Wasserarmatur in einer Verstaustellung befindet;
- Fig. 4: weitere schematische Perspektivansicht der Anordnung, wobei das Wasserauslaufrohr, eine Ausnehmung zum Aufnehmen des Wasserauslaufrohrs und ein Spülbecken durch ein Abdeckelement überdeckt sind;
- Fig. 5: eine schematische Unteransicht des Wasserauslaufrohrs;
- Fig. 6: eine schematische Seitenansicht einer Halbschale zum Führen des Wasserauslaufrohrs;
- Fig. 7: eine schematische Perspektivansicht der Halbschale;
- Fig. 8: eine schematische Seitenansicht der Wasserarmatur; und
- Fig. 9: eine schematische Perspektivansicht der Wasserarmatur.

In den Fig. sind gleiche oder funktionsgleiche Elemente mit gleichen Bezugszeichen versehen

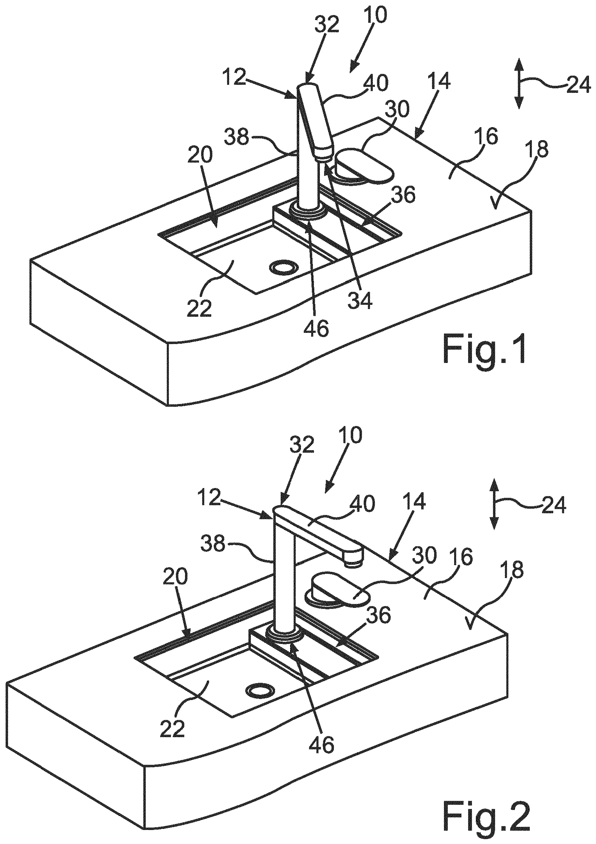

Fig. 1 und 2 zeigen in einer jeweiligen schematischen Perspektivansicht eine im Ganzen mit 10 bezeichnete Anordnung einer Wasserarmatur 12 an einem Einrichtungsgegenstand 14 für eine Vorrichtung wie beispielsweise einen Wohnwagen, ein Caravan, ein Motorcaravan oder ein Boot. Bei der Anordnung 10 ist die Wasserarmatur 12 an dem Einrichtungsgegenstand 14 gehalten. Der Einrichtungsgegenstand 14 umfasst eine Arbeitsplatte 16, welche eine Oberfläche 18 aufweist. Außerdem umfasst der Einrichtungsgegenstand 14 ein beispielsweise als Spülbecken fungierendes Becken 20, welches beispielsweise zum Auffangen beziehungsweise Aufnehmen und Abführen von Wasser genutzt wird. Das Wasser, welches mittels des Beckens 20 aufgefangen und abgeführt werden kann, kann beispielsweise aus der Wasserarmatur 12 ausströmen, wie im Folgenden noch näher erläutert wird. Dabei ist ein Boden 22 des Beckens 20, insbesondere in Einbaulage der Wasserarmatur 12 und des Einrichtungsgegenstands 14, in vertikaler Richtung nach unten hin gegenüber der Oberfläche 18 zurückversetzt, wobei die vertikale Richtung in Fig. 1 durch einen Doppelpfeil 24 veranschaulicht ist.

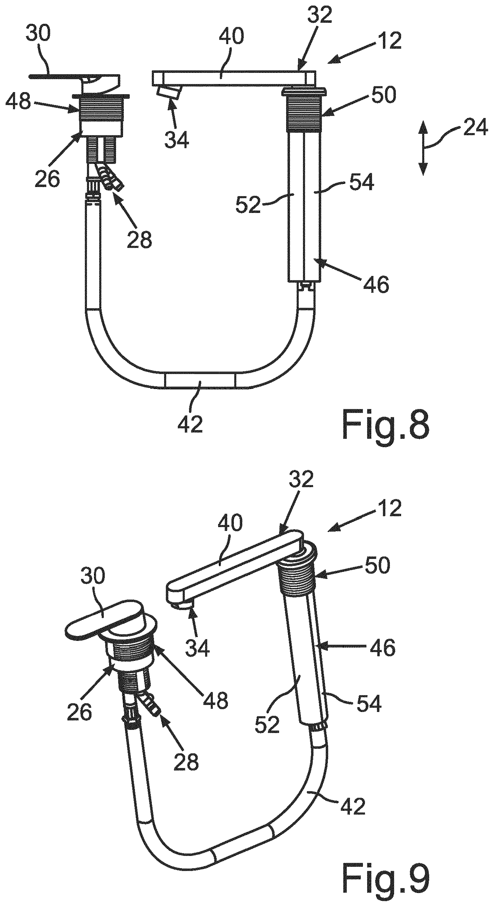

In Zusammenschau mit Fig. 8 und 9 ist erkennbar, dass die Wasserarmatur 12 einen auch als Mischbatterie bezeichneten Mischer 26 aufweist, welcher, insbesondere über Wasseranschlüsse 28, mit Warmwasser und Kaltwasser versorgbar ist. Das Warmwasser und das Kaltwasser können beispielsweise über die Wasseranschlüsse 28 in den Mischer 26 und insbesondere in einen in den Fig. nicht erkennbaren Mischbereich des Mischers 26 einströmen, sodass das Warmwasser und das Kaltwasser in dem Mischbereich und somit mittels des Mischers 26 gemischt werden beziehungsweise gemischt werden können. Der Mischer 26 weist dabei ein Bedienelement 30 auf, mittels welchem beispielsweise ein Verhältnis des Kaltwassers zu dem Warmwasser einstellbar ist. Mit anderen Worten wird der Mischer 26 beispielsweise genutzt, um ein das Kaltwasser und das Warmwasser umfassendes Gemisch zu bilden. Mittels des Bedienelements 30 können dabei jeweilige Anteile des Warmwassers und des Kaltwassers an dem Gemisch eingestellt werden.

Die Wasserarmatur 12 umfasst ferner ein im Ganzen mit 32 bezeichnetes Wasserauslaufrohr, welches von dem Mischer 26 mit dem Kaltwasser und dem Warmwasser beziehungsweise mit dem Gemisch versorgbar ist. Das Wasserauslaufrohr 32 umfasst dabei wenigstens eine auch Austrittsöffnung bezeichnete Ausströmöffnung 34, über welche das Warmwasser beziehungsweise das Kaltwasser aus dem Wasserauslaufrohr 32 und somit aus der Wasserarmatur 12 insgesamt ausströmen und beispielsweise in das Becken 20 einströmen kann.

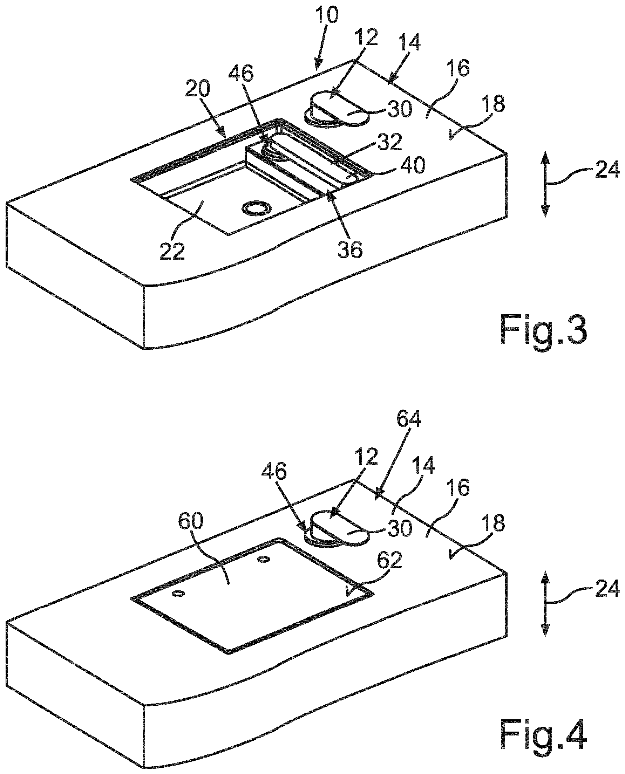

Um nun einen besonders kompakten Aufbau realisieren zu können, ist das Wasserauslaufrohr 32 bezogen auf seine in den Fig. gezeigte Einbaulage in vertikaler Richtung höhenverstellbar, das heißt relativ zu dem Einrichtungsgegenstand 14 translatorisch bewegbar. Somit kann das Wasserauslaufrohr 32 in vertikaler Richtung relativ zu dem Einrichtungsgegenstand 14 zwischen wenigstens einer in Fig. 2 gezeigten Gebrauchsstellung und wenigstens einer in Fig. 3 gezeigten Verstaustellung verschoben werden. Dabei schließt sich an das Becken 20 eine mit dem Becken 20 verbundene Ausnehmung 36 an, in welcher das Wasserauslaufrohr 32 in der Verstaustellung zumindest teilweise aufgenommen ist.

Besonders gut aus Fig. 1 und 2 ist erkennbar, dass das Wasserauslaufrohr 32 ein erstes Rohrteil 38 und ein zweites Rohrteil 40 aufweist. Bezogen auf die Einbaulage des Wasserauslaufrohrs 32 erstreckt sich das Rohrteil 38 zumindest im Wesentlichen in vertikaler Richtung, während sich das Rohrteil 40 schräg oder vorliegend senkrecht und somit in horizontaler Richtung erstreckt. Die Rohrteile 38 und 34 weisen somit jeweilige Längserstreckungsrichtungen auf, wobei die Längserstreckungsrichtung des Rohrteils 38 in vertikale Richtung und die Längserstreckungsrichtung des Rohrteils 40 in horizontaler Richtung verläuft. Dabei sind die Rohrteile 38 und 40 drehfest miteinander verbunden, wobei die Rohrteile 38 und 40 einstückig miteinander ausgebildet sein können. Die Wasserarmatur 12 nimmt dabei ihre Einbaulage in vollständig hergestelltem Zustand der Wasserarmatur 12 und der genannten Vorrichtung ein, wobei im vollständig hergestellten Zustand der Vorrichtung die Wasserarmatur 12 und der Einrichtungsgegenstand 14 an, insbesondere in, der Vorrichtung montiert sind, und wobei die Wasserarmatur 12 am Einrichtungsgegenstand 14 gehalten ist. Ferner nimmt die Wasserarmatur 12 beispielsweise ihre Einbaulage dann ein, wenn die Vorrichtung auf einer zumindest im Wesentlichen horizontalen Fläche steht.

Um einen besonders großen Weg zu realisieren, um welchen das Wasserauslaufrohr 32 in vertikaler Richtung höhenverstellt und somit angehoben und abgesenkt werden kann, ist das Wasserauslaufrohr 32 bezogen auf seine Einbaulage in vertikaler Richtung relativ zu dem Mischer 26 bewegbar und dadurch höhenverstellbar. Dabei ist das Wasserauslaufrohr 32, insbesondere wenigstens ein von dem Warmwasser und von dem Kaltwasser durchströmbarer Wasserkanal des Wasserauslaufrohrs 32, über einen flexiblen Schlauch 42 (Fig. 8 und 9) fluidisch mit dem Mischer 26, insbesondere mit dem Mischbereich, verbunden, sodass das Wasserauslaufrohr 32 über den flexiblen Schlauch 42 mit dem von dem Mischer 26 bereitgestellten Warmwasser und Kaltwasser versorgbar ist beziehungsweise versorgt wird. Mittels des Bedienelements 30 kann dabei insbesondere eine Menge des Wassers eingestellt werden, die von dem Mischer 26 bereitgestellt und über den flexiblen Schlauch 42 zu dem Wasserauslaufrohr 32 geleitet wird und über die Ausströmöffnung 34 aus dem Wasserauslaufrohr 32 ausströmt.

Der flexible Schlauch 42 ist einenends mechanisch mit dem Mischer 26 und anderenends mechanisch mit dem Wasserauslaufrohr 32 verbunden, sodass sich beispielsweise zumindest ein Teil des flexiblen Schlauchs 42 mit dem Wasserauslaufrohr 32 mitbewegt, wenn das Wasserauslaufrohr 32 in vertikaler Richtung relativ zu dem Einrichtungsgegenstand 14 und relativ zu dem Mischer 26 in vertikaler Richtung bewegt wird.

Aus Fig. 1 bis 3 ist erkennbar, dass die in Fig. 2 gezeigte Gebrauchsstellung des Wasserauslaufrohrs 32 mit einer Absenkschwenkstellung korrespondiert, da das Wasserauslaufrohr 32 dann, wenn es sich in der Absenkschwenkstellung befindet, in vertikaler Richtung relativ zu dem Einrichtungsgegenstand 14 und relativ zu dem Mischer 26 abgesenkt und dadurch in die in Fig. 3 gezeigte Verstaustellung translatorisch bewegt werden kann.

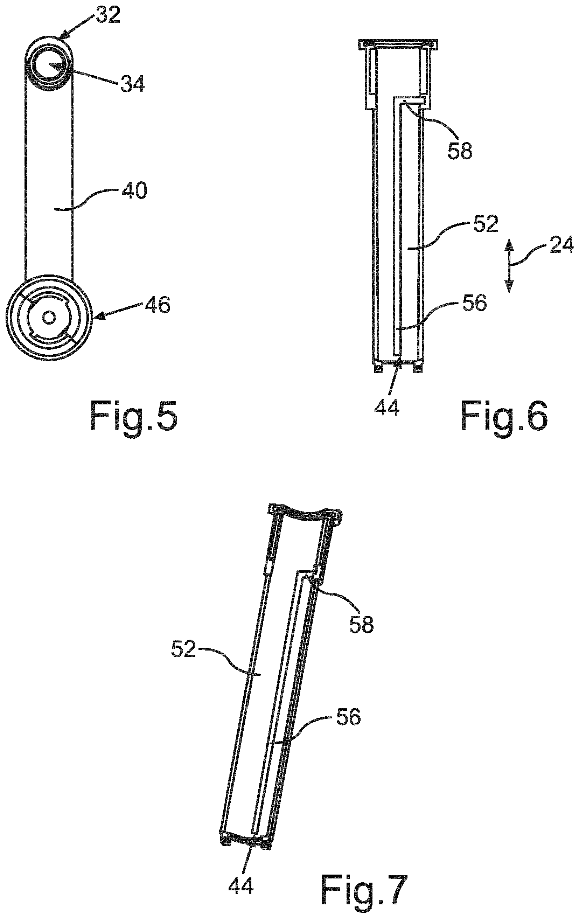

Wird beispielsweise das Wasserauslaufrohr 32 ausgehend von der Absenkschwenkstellung, welche in Fig. 2 gezeigt ist, um eine in vertikaler Richtung verlaufende Drehachse relativ zu dem Einrichtungsgegenstand 14 und relativ zu dem Mischer 26 verschwenkt, so kommt das Wasserauslaufrohr 32 beispielsweise in eine in Fig. 2 gezeigte, von der Absenkschwenkstellung unterschiedliche Gebrauchsschwenkstellung. Insbesondere kann das Wasserauslaufrohr 32 zwischen der Absenkschwenkstellung und einer Vielzahl von von der Absenkschwenkstellung unterschiedlichen Gebrauchsschwenkstellungen um die genannte Drehachse relativ zu dem Einrichtungsgegenstand 14 und insbesondere relativ zu dem Mischer 26 verschwenkt werden. Das Wasserauslaufrohr 32 kann jedoch vorzugsweise dann und nur dann abgesenkt und somit in die Gebrauchsstellung bewegt werden, wenn sich das Wasserauslaufrohr 32 in der Absenkschwenkstellung befindet. Ein Absenken des Wasserauslaufrohrs 32 aus der jeweiligen, von der Absenkschwenkstellung unterschiedlichen Gebrauchsschwenkstellung ist nicht möglich und wird beispielsweise mittels einer an dem Wasserauslaufrohr 32 vorgesehenen, in den Fig. nicht erkennbaren ersten Führungseinrichtung und einer aus Fig. 6 und 7 erkennbaren zweiten Führungseinrichtung 44 verhindert.

Ein erstes Rohrteil 38 wird auch als senkrechter Bereich bezeichnet, wobei ein zweites Rohrteil 40 auch als waagerechter Bereich bezeichnet wird. Aus Fig. 6 bis 9 ist besonders gut erkennbar, dass das Wasserauslaufrohr 32, insbesondere das Rohrteil 38, bei der Anordnung 10 zumindest teilweise in einem als Führungsrohr fungierenden äußeren Rohrsegment 46 angeordnet ist. Durch Absenken des Wasserauslaufrohrs 32 taucht das Rohrteil 38 in das äußere Rohrsegment 46 ein. Wird das Wasserauslaufrohr 32 angehoben, so wird das Rohrteil 38 aus dem äußeren Rohrsegment 46 herausgezogen. Somit ist das Wasserauslaufrohr 32 in vertikaler Richtung relativ zu dem als Führungsrohr fungierenden äußeren Rohrsegment 46 höhenverstellbar. Das als Führungsrohrsegment fungierende Rohrsegment 46 ist beispielsweise in dem auch als Spüle bezeichneten Becken 20 selbst oder auch in der auch als Küchenarbeitsplatte bezeichneten Arbeitsplatte 16 so eingebaut, dass sich das Rohrsegment 46 zumindest überwiegend in vertikaler Richtung unterhalb des Beckens 20 beziehungsweise der Arbeitsplatte 16 erstreckt.

Bei dem in den Figuren veranschaulichten Ausführungsbeispiel weist der Mischer 26 ein als Gewinde, insbesondere als Außengewinde, ausgebildetes erstes Befestigungselement 48 auf, mittels welchem der Mischer 26 mit dem Einrichtungsgegenstand 14 verbunden beziehungsweise verbindbar ist. Des Weiteren weist das Rohrsegment 46 ein vorliegend als Gewinde, insbesondere als Außengewinde, ausgebildetes zweites Befestigungselement 50 auf, mittels welchem das Rohrsegment 46 mit dem Einrichtungsgegenstand 14 verbunden beziehungsweise verbindbar ist.

Besonders gut aus Fig. 8 und 9 ist erkennbar, dass das Rohrsegment 46 halbschalig ausgeführt ist und somit zwei auch als Rohrhalbschalen oder Schalenelemente bezeichnete Halbschalen 52 und 54 umfasst, von denen in Fig. 6 und 7 die Halbschale 52 gezeigt ist. Das Rohrsegment 46 wird beispielsweise derart gebildet, dass die Halbschalen 52 und 54 zusammengebaut beziehungsweise zusammengesetzt werden. Die an dem Rohrsegment vorgesehen Führungseinrichtung 44 umfasst wenigstens beispielsweise als Führungsnut ausgebildete erste Führungsbahn 56 und eine beispielsweise als Führungsnut ausgebildete zweite Führungsbahn 58, welche mit der ersten Führungsbahn 56 verbunden ist. Die in den Fig. nicht erkennbare und beispielsweise an dem Wasserauslaufrohr 32, insbesondere an dem ersten Rohrteil 38, vorgesehene Führungseinrichtung umfasst beispielsweise wenigstens ein Führungselement, welches beispielsweise in der Verstaustellung in die erste Führungsbahn 56 eingreift. Somit wirken die Führungseinrichtungen formschlüssig zusammen.

Während die erste Führungsbahn 56, insbesondere geradlinig, in vertikaler Richtung verläuft, erstreckt sich die zweite Führungsbahn 58 in Umfangsrichtung des Rohrsegments 46 beziehungsweise des Wasserauslaufrohrs 32, insbesondere des ersten Rohrteils 38 und ist in einem Winkel zu der ersten Führungsbahn 56 angeordnet. Somit fungiert die erste Führungsbahn 56 als vertikale beziehungsweise senkrechte Absenk- und Anhebeführung, wobei die zweite Führungsbahn 58 als waagerecht beziehungsweise horizontale Dreh- beziehungsweise Schwenkführung fungiert.

Der als flexible Zuleitung fungierende Schlauch 42 ist beispielsweise drehfest beziehungsweise verdrehsicher mit dem Wasserauslaufrohr 32, insbesondere mit dem Rohrteil 38, verbunden, sodass sich der Schlauch 42 beispielsweise in vertikaler Richtung nach unten hin an das Wasserauslaufrohr 32, insbesondere an das Rohrteil 38, anschließt. Somit bildet beispielsweise der Schlauch 42 einen unteren Abschluss des Rohrteils 38, welcher ein senkrechter Auslaufbereich des auch einfacher als Auslauf bezeichneten Wasserauslaufrohrs 32 bildet. Das genannte, beispielsweise an dem Wasserauslaufrohr 32, insbesondere an dem Rohrteil 38, vorgesehene Führungselement ist beispielsweise an einem unteren Ende des Rohrteils 38 beziehungsweise in einer unteren Hälfte, insbesondere in einem unteren Drittel, des Rohrteils 38 angeordnet.

Wird beispielsweise das Wasserauslaufrohr 32 ausgehend von der Verstaustellung angehoben und dadurch von dem Becken 20 wegbewegt, so wird dadurch das Führungselement entlang der Führungsbahn 56 bewegt. Dadurch kommt das Wasserauslaufrohr 32 auf seinem Weg von der Verstaustellung in der Gebrauchsstellung (Absenkschwenkstellung) in mehrere, zwischen der Verstaustellung und der Gebrauchsstellung angeordneten Zwischenstellungen. In den Zwischenstellungen und in der Verstaustellung greift das Führungselement in die Führungsbahn 56 ein und wirkt derart mit der Führungsbahn 56 zusammen, dass die Führungsbahn 56 und das Führungselement in den Zwischenstellungen und in der Verstaustellung eine Drehung des Wasserauslaufrohrs 32 um die Drehachse relativ zu dem Rohrsegment 46 und somit relativ zu dem Einrichtungsgegenstand 14, mit welchem beispielsweise das Rohrsegment 46 drehfest verbunden ist, verhindern. Dies bedeutet, dass das Wasserauslaufrohr 32 in der Verstaustellung und in den Zwischenstellungen nicht um die Drehachse relativ zu dem Einrichtungsgegenstand 14 gedreht werden kann.

Durch Bewegen des Wasserauslaufrohrs 32 in die Gebrauchsstellung kommt beispielsweise das Führungselement in die Führungsbahn 58 beziehungsweise in Überdeckung mit der Führungsbahn 58, sodass dann das Wasserauslaufrohr 32 ausgehend von der Gebrauchsstellung um die Drehachse relativ zu dem Rohrsegment 46 und somit relativ zu dem Einrichtungsgegenstand 14 in die jeweilige Gebrauchsschwenkstellung geschwenkt werden kann. Ein solches Verschwenken des Wasserauslaufrohrs 32 aus der Absenkschwenkstellung in die jeweilige Gebrauchsschwenkstellung lassen das Führungselement und die Führungsbahn 58 zu, da das Führungselement ausgehend von der Gebrauchsstellung (Absenkschwenkstellung) in die und insbesondere entlang der Führungsbahn 58 bewegt werden kann. Somit kann das Wasserauslaufrohr 32 in seiner oberen, das heißt ausgezogenen Position in Form der Gebrauchsstellung über das Becken 20 geschwenkt werden.

In der jeweiligen Gebrauchsschwenkstellung wird das Wasserauslaufrohr 32 mittels des Führungselements und mittels der Führungsbahn 58 gegen ein unerwünschtes Absenken gesichert, da in der jeweiligen Gebrauchsschwenkstellung das Führungselement in die Führungsbahn 58 eingreift. Mit andere Worten kann das Wasserauslaufrohr 32 aus der jeweiligen Gebrauchsschenkstellung nicht abgesenkt und somit nicht auf das Becken 20 zubewegt werden. Um das Wasserauslaufrohr 32 wieder in die Verstaustellung zu bewegen, wird das Wasserauslaufrohr 32 aus der jeweiligen Gebrauchsschwenkstellung in die auch als Absenkposition bezeichnete Absenkschwenkstellung geschwenkt. Dann kann das Wasserauslaufrohr 32 insbesondere durch leichten Druck in vertikaler Richtung von oben nach unten abgesenkt und dadurch in die Ausnehmung 36 beziehungsweise in die Spüle (Becken 20) bewegt werden.

Um beispielsweise zu verhindern, dass sich das in der Absenkschwenkstellung befindende Wasserauslaufrohr 32 selbstständig beispielsweise aufgrund seines Eigengewichts absenkt und somit beispielsweise herabfällt, ist beispielsweise ein insbesondere als Dichtungselement ausgebildetes Abbremselement vorgesehen, welches beispielsweise zwischen dem Rohrteil 38 und dem Rohrsegment 46 angeordnet ist und dabei insbesondere einerseits an dem Rohrteil 38 und andererseits an dem Rohrsegment 46 abgestützt ist. Das Abbremselement ist beispielsweise ein Elastomer- beziehungsweise Gummielement wie etwa ein O-Ring, ein Quad-, Axial-, Flach- oder Lippendichtring. Das Abbremselement übt insbesondere durch Reibung eine dem Absenken des Wasserauslaufrohrs 32 entgegenstehende Kraft auf das Wasserauslaufrohr 32 aus, wodurch beispielsweise das insbesondere selbstständige Absenken des Wasserauslaufrohrs 32 abgebremst beziehungsweise verhindert wird. Zudem kann das Abbremselement für einen Bereich unterhalb des Beckens 20 beziehungsweise der Arbeitsplatte 16 als Abdichtung gegen eindringendes Wasser fungieren.

Im Vergleich zu Absenkmechanismen mit Feder- und/oder Dämpferelementen und/oder motorischen, insbesondere elektromotorischen, Antrieben, können bei der Anordnung 10 deutliche Kosten- und Gewichtseinsparungen erzielt werden. Zudem ergibt sich dadurch ein erheblich geringerer Bauraum unterhalb des Beckens 20 beziehungsweise der Arbeitsplatte 16, sodass ein besonders gewichtsgünstiger, kostengünstiger und kompakter Aufbau dargestellt werden kann.

Wie aus Fig. 3 erkennbar ist, ist das Rohrteil 40 in der Verstaustellung vollständig in der Ausnehmung 36 aufgenommen und gegenüber der Oberfläche 18 zurückversetzt. Dadurch ist es beispielsweise möglich, das Becken 20, die Ausnehmung 36 und das in der Ausnehmung 36 aufgenommene Rohrteil 40 mittels eines aus Fig. 4 erkennbaren und insbesondere eigensteifen Abdeckelements 60 abzudecken, welches beispielsweise als Abdeckplatte ausgebildet ist. Das Abdeckelement 60 weist beispielsweise eine weitere Oberfläche 62 auf, welche dann, wenn das Becken 20, die Ausnehmung 36 und das Rohrteil 40 mittels des Abdeckelements 60 abgedeckt beziehungsweise überdeckt sind, bündig mit der sich an die Oberfläche 62 anschließenden Oberfläche 18 der Arbeitsplatte 16 angeordnet ist. Dadurch bilden die bündig miteinander angeordneten Oberflächen 18 und 62 eine besonders große zur Verfügung stehende Arbeitsfläche 64 insgesamt.

## Patentansprüche

1. Anordnung (10) mit Wasserarmatur (12) und einem Einrichtungsgegenstand (14), wobei die Wasserarmatur (12) an dem Einrichtungsgegenstand (14) gehalten ist und einen mit Warmwasser und Kaltwasser versorgbaren Mischer (26) zum Mischen des Warmwassers mit dem Kaltwasser und ein von dem Mischer (26) mit dem Warmwasser und dem Kaltwasser versorgbares Wasserauslaufrohr (32) aufweist, wobei das Wasserauslaufrohr (32) in vertikaler Richtung relativ zu dem Einrichtungsgegenstand (14) höhenverstellbar ist, wobei das Wasserauslaufrohr (32) ein in Einbaulage des Wasserauslaufrohrs (32) in vertikaler Richtung (24) verlaufendes erstes Rohrteil (38) und ein schräg oder senkrecht zum ersten Rohrteil (38) verlaufendes zweites Rohrteil (40) aufweist, wobei das erste Rohrteil (38) wenigstens eine Führungseinrichtung aufweist, mittels welcher das Wasserauslaufrohr (32) beim Höhenverstellen zu führen ist, und wobei das Wasserauslaufrohr (32) bezogen auf seine Einbaulage in vertikaler Richtung (24) zwischen wenigstens einer Verstaustellung und wenigstens einer Gebrauchsstellung verschiebbar ist, in welcher das Wasserauslaufrohr (32) gegenüber der Verstaustellung in vertikaler Richtung höher angeordnet ist, wobei die Führungseinrichtung in der Gebrauchsstellung eine Drehung des Wasserauslaufrohrs (32) um eine in vertikaler Richtung verlaufende Drehachse zulässt,
**dadurch gekennzeichnet, dass**
die Führungseinrichtung in der Verstaustellung eine Drehung des Wasserauslaufrohrs (32) um die Drehachse verhindert, wobei der Einrichtungsgegenstand (14) eine Arbeitsplatte (16), welche eine Oberfläche (18) aufweist, und ein Becken (20) zum Auffangen und Abführen von Wasser umfasst, wobei sich an das Becken (20) eine mit dem Becken (20) verbundene Ausnehmung (36) anschließt, und wobei das zweite Rohrteil (40) in der Verstaustellung vollständig in der Ausnehmung (36) aufgenommen und gegenüber der Oberfläche (18) zurückversetzt ist.

2. Anordnung nach Anspruch 1,
**dadurch gekennzeichnet, dass**
das Wasserauslaufrohr (32) bezogen auf seine Einbaulage in vertikaler Richtung (24) relativ zu dem Mischer (26) translatorisch bewegbar und dadurch höhenverstellbar ist.

3. Anordnung nach Anspruch 1 oder 2,
**dadurch gekennzeichnet, dass**
das Wasserauslaufrohr (32) mit dem Mischer (26) über einen flexiblen Schlauch (42) fluidisch verbunden ist, über welchen das Wasserauslaufrohr (32) mit dem von dem Mischer (26) bereitgestellten Warmwasser und Kaltwasser versorgbar ist.

4. Anordnung nach den Ansprüchen 2 und 3,
**dadurch gekennzeichnet, dass**
sich bei in vertikaler Richtung (24) verlaufenden Relativbewegungen zwischen dem Wasserauslaufrohr (32) und dem Mischer (26) zumindest ein Teil des Schlauches (42) mit dem Wasserauslaufrohr (42) relativ zu dem Mischer (26) mitbewegt.

5. Anordnung nach einem der vorhergehenden Ansprüche,
**dadurch gekennzeichnet, dass**
die Führungseinrichtung eine erste und zweite Führungsbahn (56, 58) umfasst, wobei die zweite Führungsbahn (58) mit der ersten Führungsbahn (56) verbunden ist und die erste Führungsbahn in oder an dem ersten Rohrteil (38) ausgebildet ist, wobei die zweite Führungsbahn (58) in einem Winkel zu der ersten Führungsbahn (56) angeordnet ist.

6. Anordnung nach Anspruch 5,
**dadurch gekennzeichnet, dass**
die zweite Führungsbahn (58) in Umfangsrichtung des ersten Rohrteils (38) ausgebildet ist.

7. Anordnung nach einem der vorhergehenden Ansprüche,
**gekennzeichnet durch**
wenigstens ein aus einem Kunststoff gebildetes Abbremselement, welches eine der Höhenverstellung entgegenwirkende Kraft auf das Wasserauslaufrohr (32) ausübt.

8. Anordnung nach Anspruch 7,
**dadurch gekennzeichnet, dass**
das Abbremselement als Dichtungselement ausgebildet ist, mittels welchem das Wasserauslaufrohr (32) gegen wenigstens ein weiteres Bauteil der Wasserarmatur (12) abgedichtet ist.

9. Anhänger, umfassend wenigstens eine Anordnung (10) nach einem der vorhergehenden Ansprüche.

10. Fahrzeug, umfassend wenigstens eine Anordnung (10) nach einem der Ansprüche 1 bis 8.

## Claims

1. An assembly (10) with water fitting (12) and a fitment (14), wherein the water fitting (12) is retained on the fitment (14) and comprises a mixer (26) capable of being supplied with warm water and cold water for mixing the warm water with the cold water and a water outlet pipe (32) capable of being supplied with the warm water and the cold water by the mixer (26), wherein the water outlet pipe (32) is adjustable in height in vertical direction in relation to the fitment (14), wherein the water outlet pipe (32) comprises a first pipe part (38) extending in vertical direction (24) in installation position of the water outlet pipe (32) and a second pipe part (40) extending obliquely or perpendicularly to the first pipe part (38), wherein the first pipe part (38) comprises at least one guiding device, by means of which the water outlet pipe (32) is to be guided in adjusting in height, and wherein the water outlet pipe (32) is displaceable in vertical direction (24) related to its installation position between at least one stowage position and at least one use position, in which the water outlet pipe (32) is arranged higher in vertical direction with respect to the stowage position, wherein the guiding device allows a rotation of the water outlet pipe (32) around a rotational axis extending in vertical direction in the use position,
**characterized in that**
the guiding device prevents a rotation of the water outlet pipe (32) around the rotational axis in the stowage position, wherein the fitment (14) includes a worktop (16) comprising a surface (18) and a basin (20) for collecting and discharging water, wherein a recess (36) connected to the basin (20) adjoins to the basin (20), and wherein the second pipe part (40) is completely received in the recess (36) and recessed with respect to the surface (18) in the stowage position.

2. The assembly according to claim 1,
**characterized in that**
the water outlet pipe (32) is translationally movable and thereby adjustable in height in vertical direction (24) in relation to the mixer (26) related to its installation position.

3. The assembly according to claim 1 or 2,
**characterized in that**
the water outlet pipe (32) is fluidically connected to the mixer (26) via a flexible hose (42), via which the water outlet pipe (32) can be supplied with the warm water and cold water provided by the mixer (26).

4. The assembly according to claims 2 and 3,
**characterized in that**
at least a part of the hose (42) moves together with the water outlet pipe (42) in relation to the mixer (26) upon relative movements proceeding in vertical direction (24) between the water outlet pipe (32) and the mixer (26).

5. The assembly according to any one of the preceding claims, **characterized in that**
the guiding device includes a first and a second guide track (56, 58), wherein the second guide track (58) is connected to the first guide track (56) and the first guide track is formed in or on the first pipe part (38), wherein the second guide track (58) is arranged at an angle to the first guide track (56).

6. The assembly according to claim 5,
**characterized in that**
the second guide track (58) is formed in circumferential direction of the first pipe part (38).

7. The assembly according to any one of the preceding claims, **characterized by**
at least one decelerating element formed of a plastic, which exerts a force counteracting the height adjustment on the water outlet pipe (32).

8. The assembly according to claim 7,
**characterized in that**
the decelerating element is formed as a sealing element, by means of which the water outlet pipe (32) is sealed against at least one further component of the water fitting (12).

9. A trailer including at least one assembly (10) according to any one of the preceding claims.

10. A vehicle including at least one assembly (10) according to any one of claims 1 to 8.

## Revendications

1. Ensemble (10) avec une robinetterie d'eau (12) et un objet d'équipement (14), dans lequel la robinetterie d'eau (12) est maintenue sur l'objet d'équipement (14), et comporte un mélangeur (26), pouvant être alimenté en eau chaude et en eau froide pour mélanger l'eau chaude avec l'eau froide, et un tube de sortie d'eau (32), pouvant être alimenté en eau chaude et en eau froide, dans lequel le tube de sortie d'eau (32) est réglable en hauteur dans le sens vertical par rapport à l'objet d'équipement (14), dans lequel le tube de sortie d'eau (32) comporte une première partie de tube (38), s'étendant dans le sens vertical (24) en position de montage du tube de sortie d'eau (32), et une deuxième partie de tube (40), s'étendant obliquement ou perpendiculairement à la première partie de tube (38), dans lequel la première partie de tube (38) comporte au moins un dispositif de guidage, au moyen duquel le tube de sortie d'eau (32) est à guider lors du réglage en hauteur, et dans lequel le tube de sortie d'eau (32), par rapport à sa position d'installation, est déplaçable dans le sens vertical (24) entre au moins une position rétractée et au moins une position d'utilisation, dans laquelle le tube de sortie d'eau (32), par rapport à la position rétractée, est agencé plus haut dans le sens vertical, dans lequel le dispositif de guidage, dans la position d'utilisation, permet une rotation du tube de sortie d'eau (32) autour d'un axe de rotation s'étendant dans le sens vertical,
**caractérisé en ce que**
le dispositif de guidage, dans la position rétractée, empêche une rotation du tube de sortie d'eau (32) autour de l'axe de rotation, dans lequel l'objet d'équipement (14) comporte un plan de travail (16), présentant une surface (18), et une cuvette (20) pour recueillir et évacuer l'eau, dans lequel la cuvette (20) est suivie d'un évidement (36), se raccordant à la cuvette (20), et dans lequel la deuxième partie de tube (40), dans la position rétractée, est complètement reçue dans l'évidement (36), et est en retrait par rapport à la surface (18).

2. Ensemble selon la revendication 1,
**caractérisé en ce que**
le tube de sortie d'eau (32), relatif à sa position d'installation, est mobile en translation dans le sens vertical (24) par rapport au mélangeur (26), et peut ainsi être réglé en hauteur.

3. Ensemble selon la revendication 1 ou 2,
**caractérisé en ce que**
le tube de sortie d'eau (32) est en communication fluidique avec le mélangeur (26) par un tuyau flexible (42), permettant d'alimenter le tube de sortie d'eau (32) en eau chaude et en eau froide fournies par le mélangeur (26).

4. Ensemble selon la revendication 2 et 3,
**caractérisé en ce que,**
lors de mouvements relatifs entre le tube de sortie d'eau (32) et le mélangeur (26), s'étendant dans la direction verticale (24), au moins une partie du tuyau (42) se déplace avec le tube de sortie d'eau (32) relatif au mélangeur (26).

5. Ensemble selon l'une quelconque des revendications précédentes, **caractérisé en ce que**
le dispositif de guidage comporte une première et une seconde voie de guidage (56, 58), dans lequel la seconde voie de guidage (58) est reliée à la première voie de guidage (56), et la première voie de guidage (56) est formée dans ou à la première partie de tube (38), dans lequel la seconde voie de guidage (58) est agencée à un angle de la première voie de guidage (56).

6. Ensemble selon la revendication 5,
**caractérisé en ce que**
la seconde voie de guidage (58) est formée dans une direction circonférentielle de la première partie du tube (38).

7. Ensemble selon l'une quelconque des revendications précédentes, **caractérisé**
**par** au moins un élément de freinage formé en matière plastique, qui exerce sur le tube de sortie d'eau (32) une force s'opposant au réglage en hauteur.

8. Ensemble selon la revendication 7,
**caractérisé en ce que**
l'élément de freinage est conçu comme un élément d'étanchéité, au moyen duquel le tube de sortie d'eau (32) est rendu étanche par rapport à au moins un autre composant de la robinetterie d'eau (12).

9. Remorque, comportant au moins un ensemble (10) selon l'une quelconque des revendications précédentes.

10. Véhicule, comportant au moins un ensemble (10) selon l'une quelconque des revendications 1 à 8.
